# EUROPÄISCHE PATENTSCHRIFT

(11) **EP 0 519 183 B1**
(45) Veröffentlichungstag und Bekanntmachung des Hinweises auf die Patenterteilung: **27.09.1995**
(21) Anmeldenummer: 92106903.5
(22) Anmeldetag: 23.04.1992
(51) Int. Cl.: G01G 19/415, H01H 13/70

(54) **Elektronische, durch einen Mikrocomputer gesteuerte Waage**
Microcomputer controlled electronic balance
Balance électronique commandé par micro-ordinateur

(30) Priorität: 04.05.1991 DE 4114573
(43) Veröffentlichungstag der Anmeldung: 23.12.1992
(73) Patentinhaber: Bizerba GmbH & Co. KG, D-72336 Balingen (DE)
(72) Erfinder: Kraft,Horst . Dipl.-Ing.(FH), W-7460 Balingen (DE); Purr,Horst .Ing.(grad.), W-7741 Tennenbronn (DE)
(74) Vertreter: Hoeger, Stellrecht & Partner

(56) Entgegenhaltungen:
- DE-A- 3 345 372
- FR-A- 2 242 909
- GB-A- 2 123 213
- US-A- 3 988 551
- US-A- 4 525 606
- US-A- 4 602 135

## Beschreibung

Die Erfindung betrifft eine elektronische, durch einen Mikrocomputer gesteuerte Waage nach dem Oberbegriff des Patentanspruchs 1.

Waagen dieser Art (DE-A1-33 45 372) bestehen im wesentlichen aus einer Kraftmeßeinrichtung, einer Auswerteelektronik mit Mikrocomputer und einer Anzeigeeinrichtung. Die Tastatur kann als Hub- oder Folientastatur ausgebildet sein, wobei in einer Hubtastatur die Hubhöhe der Einzeltasten größer als in einer Folientastatur ist. Eine Hubtastatur anderer Art mit verstellbarer Hubhöhe der Einzeltasten ist aus US-A-30 23 696 bekannt.

Gattungsgemäße Waagen können über ein Programm in ihren Funktionen verändert werden, wobei die Funktionen z.B. mit Hilfe eines Codes über die Tastatur, einen Schlüsselschalter oder dergleichen abgerufen werden können. Ferner können bei solchen Waagen auch die gespeicherten Daten bzw. Einzelfunktionen verändert werden, beispielsweise die Anzahl der Bedienungspersonen, die Grundpreis-Abrufdaten und dergleichen. Auch können mehr oder weniger unterschiedliche Taraspeicher zur Vorauswahl vorgesehen werden, oder es sind Sonderfunktionen, beispielsweise Mehrwertsteuerberechnung, Zwischensummen usw. möglich.

Je nach Einsatz der Waage sind Tastaturen mit einem mehr oder weniger großen Tastenhub von Vorteil. Sollen an einer Waage sehr viele Daten immer wieder eingegeben werden, z.B. wechselnde Grundpreise, produktbezogene Daten usw., so besteht für eine Bedienungsperson ein erheblicher Vorteil dann, wenn die Tasten einen merklichen Hub ≧ 1,5 mm mit deutlichem Schnappeffekt haben. Derartige Tasten werden im folgenden als "Hubtasten" bezeichnet.

Durch die relativ große Hubhöhe und den Schnappeffekt wird einer Bedienungsperson über ihr Tastgefühl im Finger signalisiert, wann die Funktion ausgeführt ist. Die Bedienungsperson benötigt also keine weiteren optischen oder akustischen Signale, welche die vollzogene Funktionseinstellung anzeigen. Zugleich kann die Druckkraft mit dem Finger wesentlich gezielter gesteuert werden, wenn der Finger eine größere Bewegung macht, als wenn gegen eine Taste ohne oder mit nur sehr kleinem Hub (im folgenden Minihubtasten genannt) gedrückt wird. Aus diesen Gründen sind aus "Hubtasten" bestehende Tastaturen mit beträchtlichem Tastenhub in der Regel schneller und ermüdungsfreier zur bedienen als sogenannte Minihubtastaturen, bei denen die Tasten keinen oder nur einen sehr kleinen Hub ≦ 0,5 mm aufweisen, und zwar insbesondere dann, wenn die Bedienungsperson gewohnt ist, mit mehreren Fingern zu arbeiten, ähnlich wie bei Schreibmaschinentastaturen.

Nachteilig bei Tastaturen mit relativ großer Hubhöhe ("Hubtasten") sind die nicht schnell und einfach auswechselbaren Beschriftungen der Tasten. Sie bestehen aus einzelnen Einlegeschildern und einer den Kopf der Taste überdeckenden Klarsichtfolie oder Klarsichtschale. Diese Bauart bedingt, daß jedes Einlegeschild einzeln ausgetauscht werden muß, was zeitaufwendig ist.

Schneller und einfacher herzustellen sowie auszutauschen sind sogenannte Schriftträgerfolien, wie sie aus DE-U-87 00 968 bekannt sind. Solche Schriftträgerfolien überdecken beispielsweise mehrere Einzeltasten, die selbst beschriftet sein können, wobei die Schriftträgerfolie dann die Beschriftung für die Einzeltasten enthält. Diese Schriftträgerfolien sind zwar einfach herzustellen sowie leicht und schnell auszuwechseln, sie erfordern jedoch Tasten mit keinem oder nur sehr kleinem Hub ("Minihubtasten"), da sie nur dann der Betätigungskraft so wenig Widerstand entgegensetzen, daß das Tastverhalten der Bedienungsperson nicht oder nur wenig beeinflußt wird.

Aus den gleichen Gründen sind auch Tastaturen mit "Hubtasten" von relativ" großem Hub nicht geeignet, um beispielsweise auswechselbare Einlegeschilder mit einem abnehmbaren Rahmen über der Tastatur anzuordnen, wie aus DE-A1-38 02 660 bekannt.

Je nachdem, ob eine Waagentastatur entsprechend der gewählten Einsatzart vorzugsweise mit großer Hubhöhe oder mit schnell und einfach austauschbaren, allerdings nur für Tasten mit keinem oder kleinem Hub geeigneten Schriftträgerfolien ausgestattet sein soll, müssen bisher unterschiedliche Tastaturen verwendet werden. Dies erfordert eine entsprechend große Typenvielfalt der Tastaturen, verbunden mit zusätzlichen Kosten und relativ großem Aufwand bei Disposition, Herstellung und Lagerhaltung.

Weiter sind notwendige unterschiedliche Tastaturen insbesondere dort von Nachteil oder sogar überhaupt nicht einsetzbar, wo der Verwendungszweck der Waage einerseits häufig wechselnde Beschriftungen der Tastatur verlangt oder andererseits z.B. ein Schnelleingabetastenfeld, bestehend aus einer Zehnertastatur, konstanten Bedienertasten, wägetechnischen Grundtasten usw. erforderlich ist, wie beispielsweise bei zum Bedienverkauf eingesetzten Ladenwaagen.

Es ist Aufgabe der Erfindung, die Tastatur einer gattungsgemäßen Waage so auszubilden, daß die Waage schnell und einfach umgerüstet und variabel für die verschiedensten Einsatzarten programmiert sowie eingesetzt werden kann.

Die Aufgabe wird erfindungsgemäß durch die kennzeichnenden Merkmale des Patentanspruchs 1 gelöst.

Die nachstehende Beschreibung bevorzugter Ausführungsformen der Erfindung dient im Zusammenhang mit beiliegender Zeichnung der weiteren Erläuterung. Es zeigen:
- Fig. 1: eine schaubildliche Gesamtansicht einer Ladenwaage mit Tastatur;
- Fig. 2: eine aus zwei Tastatursegmenten bestehende Tastatur;
- Fig. 3: eine Tastatur ähnlich Fig. 2, wobei ein Tastatursegment mit einer Schriftträgerfolie überdeckt ist, und
- Fig. 4: eine komplette Tastatur, die durch einen aus Einzelfeldern mit Piktogrammen bestehenden Rahmen abgedeckt ist.

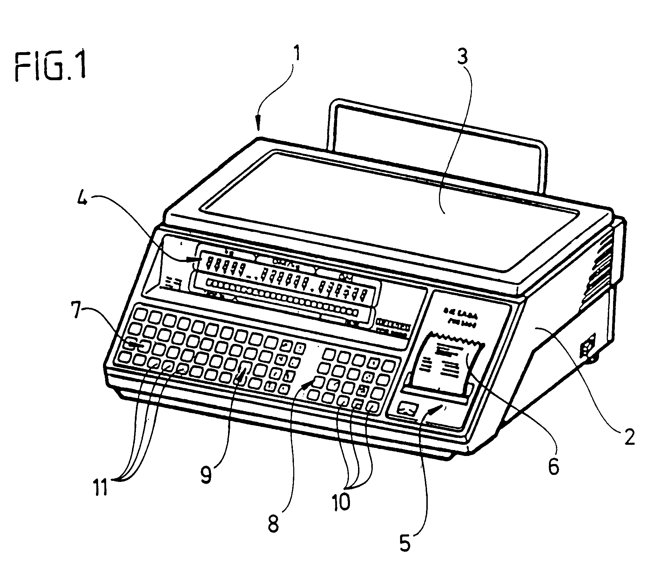

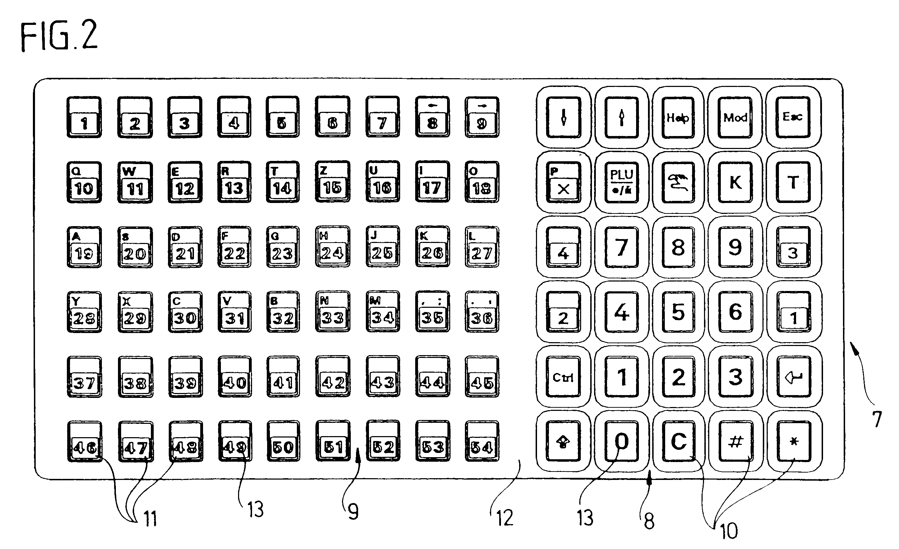

Die in Fig. 1 dargestellte Ladenwaage 1 umfaßt im wesentlichen eine auf einem Waagengestell 2 angeordnete Wägeplatte 3 zur Aufnahme eines Wägegutes sowie eine Anzeigeeinrichtung 4 und einen Drucker 5 mit einem Schlitz für die Ausgabe eines Bons 6. An der schrägverlaufenden Vorderseite des Waagengestells 2 ist ortsfest ein Tastenfeld 7 mit zahlreichen Einzeltasten angeordnet, das in ein Tastensegment 8 und ein Tastensegment 9 unterteilt ist. Das Tastensegment 8 umfaßt mehrere Einzeltasten 10, die einen beträchtlichen Hub aufweisen ("Hubtasten"). Das Tastensegment 9 besteht aus mehreren Einzeltasten 11, die einen kleineren Hub als die Tasten 10 haben ("Minihubtasten").

Die Fig. 2 zeigt im einzelnen, wie in ein und derselben Tastatur 7 unterschiedlich ausgeführte Tastatursegmente 8 und 9 angeordnet sind. Diese Tastatursegmente 8, 9 bestehen jeweils aus einer unterschiedlichen Anzahl von mit Symbolen versehenen Einzeltasten 10 bzw. 11.

Die Hubtasten 10 haben einen Tastenhub, dessen Hubhöhe ≧ 1,5 mm ist. Diese Tasten 10 sind so ausgeführt, daß beim Betätigen ein deutlicher Schnappeffekt und eine definierte Rückstellkraft entsteht. Die Hubhöhe der Minihubtasten 11 ist ≦ 0,5 mm.

Beim Betätigen der Tasten 10, 11, vorzugsweise der Tasten 10 mit dem Finger wird in an sich bekannter Weise jeweils mittels eines nicht dargestellten Tastenstößels auf einer in der Waage eingebauten, ebenfalls nicht dargestellten Leiterplatte eine elektrisch leitende Verbindung zwischen Leiterbahnen hergestellt.

Die gesamte Tastatur 7 ist an ihrer Oberseite durch eine Abdeckmatte 12 und an ihrer Unterseite durch ein nicht dargestelltes Gehäuse abgeschlossen.

Bei einer anderen Ausführungsform gemäß Fig. 2 können die jeweiligen Wegstrecken der Tastenhübe der Einzeltasten 10 und 11 in einem oder beiden Tastatursegmenten 8, 9 für alle oder einen Teil der Tasten 10, 11 direkt an der Waage wahlweise eingestellt werden. Wenn die Einzeltasten 11 Minihubtasten sind, brauchen vorzugsweise lediglich die Hubtasten 10 eingestellt zu werden.

Außerdem können bei der in Fig. 2 dargestellten Ausführungsform die an den Einzeltasten 10, 11 vorgesehenen Funktionssymbole 13 durch Auswechseln einer an jeder Taste vorgesehenen Tastkappe ganz oder teilweise ausgetauscht werden.

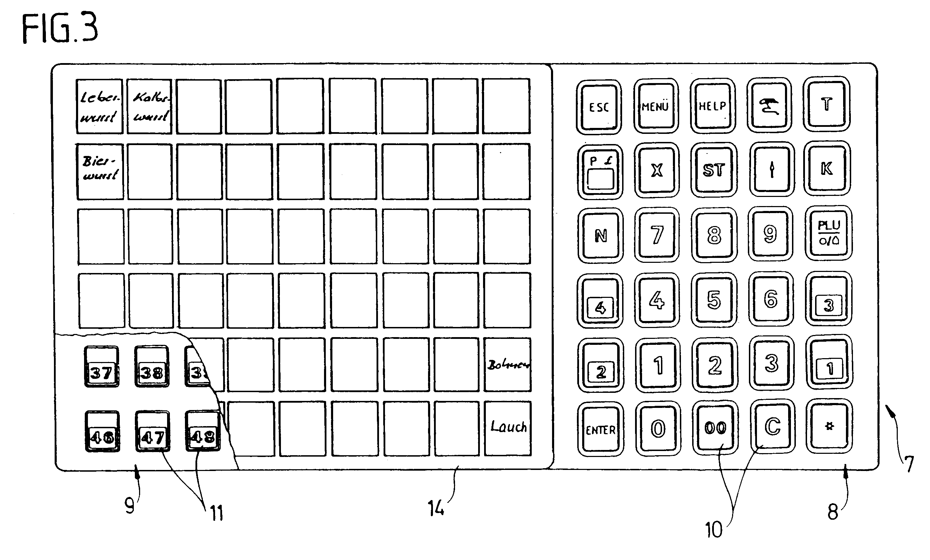

Fig. 3 zeigt eine Tastatur 7 ähnlich Fig. 2, bestehend aus zwei Tastatursegmenten 8 und 9 mit Hubtasten 10 bzw. Minihubtasten 11, wobei lediglich über dem Tastatursegment 9 in bekannter Weise eine Beschriftungsfolie 14 angeordnet ist, die das Tastatursegment 8 frei läßt. Die Tasten 11 werden durch Drücken auf das betreffende Feld der Folie 14 betätigt.

Diese Beschriftungsfolie 14 kann manuell oder maschinell in einfacher Weise beschriftet werden und ist leicht auszutauschen. In Verbindung mit den frei programmierbaren Tasten 11 und der Elektronik der Waage lassen sich damit die Betriebsarten oder Funktionen der Waage ohne großen Aufwand ändern.

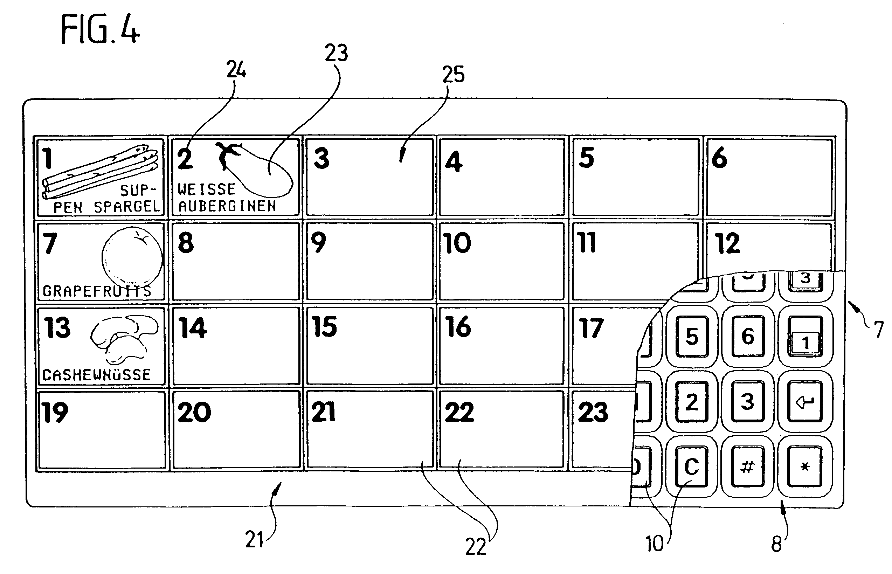

Fig. 4 zeigt eine Tastatur 7, die in zweierlei Weise ausgeführt sein kann: entweder besteht die gesamte Tastatur 7 ausschließlich aus Hubtasten 8 relativ großer Hubhöhe, die auf einen minimalen Hub < 1,5 mm, vorzugsweise etwa 0,5 mm eingestellt sind, oder die Tastatur 7 weist eine Tastenanordnung gemäß Fig. 2 mit zwei Tastensegmenten 8, 9 auf, die in ihrem Hub einstellbare Hubtasten 10 bzw. in ihrem Hub vorzugsweise unveränderliche Minihubtasten 11 umfassen. Die gesamte Tastatur ist jeweils in bekannter Weise von einem Rahmen 21 überdeckt, wie er beispielsweise in DE-A1-38 02 660 beschrieben ist. Der Rahmen 21 ist in einzelne Tastenfelder 22 unterteilt, die mit Piktogrammen 23 und/oder alphanumerischen Bezeichnungen 24 versehene Einlegeschilder 25 tragen. Unter diesen Einlegeschildern befinden sich in ebenfalls an sich bekannter Weise nicht dargestellte Betätigungselemente, die den unter den Einzeltasten 8 befindlichen, nicht dargestellten Tastschaltern sowie der frei programmierbaren Waagen-Elektronik zugeordnet sind.

Nach Abnehmen des Rahmens 21 kann bei Bedarf die gesamte Tastatur 7 oder es können wahlweise lediglich einzelne Tastatursegmente 8, 9 der Tastatur auf maximalen oder einen zwischen Minimum und Maximum liegenden Hub umgestellt werden.

Diese variable Einstellungs- und Umrüstmöglichkeit gestattet es, die Tastatur 7 in einfachster Weise, beispielsweise von kundenaktiver Selbstbedienung mit Einzeltastung auf Bedienverkauf mit Datenschnelleingabe mittels Mehrfingerbedienung umzurüsten, so daß die Waage wahlweise universell für mehrere Betriebsarten eingesetzt werden kann.

Die Einstellung der unterschiedlichen Hubhöhen der Hubtasten 8 kann z.B. mit Hilfe von (nicht dargestellten) in verschiedener Höhe gestuft angebrachten Vorsprüngen an den vier Seiten eines meist mit rechteckigem Querschnitt ausgebildeten Taststößels und mit Hilfe von damit zusammenwirkenden, entsprechenden Anschlägen in der Stößelführung erfolgen, wobei die Hubhöhe jeweils dadurch eingestellt werden kann, daß der Taststößel je nach dem gewünschten Wert der Hubhöhe um z.B. jeweils 90° um die Stößellängsachse verdreht in die Stößelführung eingeführt bzw. in dieser umgesetzt wird.

## Patentansprüche

1. Elektronische, durch einen Mikrocomputer gesteuerte Waage, insbesondere Laden- oder Industriewaage, mit einem Tastenfeld (7), welches mehrerer Tastatursegmente (8, 9) mit Einzeltasten (10, 11) aufweist,
**dadurch gekennzeichnet**,
daß die Einzeltasten (10) wenigstens eines ersten Tastatursegments (8) eine einstellbare Hubhöhe haben, daß die Einzeltasten (11) wenigstens eines zweiten Tastatursegments (9) eine unverstellbare Hubhöhe haben, und daß die wenigstens zwei Tastatursegmente (8, 9) einzeln oder gemeinsam durch Beschriftungsfolien (14) oder eine Beschriftungsfolie (14) abdeckbar sind, wobei dann die Einzeltasten (10) des wenigstens ersten Tastatursegments (8) vorzugsweise auf minimale Hubhöhe einzustellen sind.

2. Waage nach Anspruch 1, dadurch gekennzeichnet, daß die Hubhöhe der Einzeltasten (10) des ersten Tastatursegments (8) ohne Abdeckung durch die Beschriftungsfolie (14) auf Werte über 1,5 mm und bei Abdeckung durch die Beschriftungsfolie (14) auf Werte kleiner als 1,5 mm, vorzugsweise auf etwa 0,5 mm eingestellt ist.

3. Waage nach Anspruch 1, dadurch gekennzeichnet, daß die Hubhöhe der Einzeltasten (11) des zweiten Tastatursegments (9) kleiner als 1,5 mm, vorzugsweise 0,5 mm ist.

4. Waage nach Anspruch 1, dadurch gekennzeichnet, daß das Tastenfeld (7) teilweise oder vollständig durch einen mit in Einzelfelder (22) unterteilten, mit Piktogrammen (23) und/oder alphanumerischen Bezeichnungen (24) versehenen Rahmen (21) abgedeckt ist, und die Einzeltasten (10) des ersten Tastatursegments (8) auf eine minimale Hubhöhe kleiner als 1,5 mm eingestellt sind.

## Claims

1. Electronic scales controlled by a microcomputer, in particular shop or industrial scales, having a key field (7), which comprises several keyboard segments (8, 9) with individual keys (10, 11),
**characterised in that** the individual keys (10) at least of a first keyboard segment (8) have an adjustable lift height,
**in that** the individual keys (11) at least of a second keyboard segment (9) have an unadjustable lift height,
**and in that** the at least two keyboard segments (8, 9) can be covered separately or jointly by inscription membranes (14) or an inscription membrane (14), in which case the individual keys (10) of the at least first keyboard segment (8) are then preferably to be set at a minimum lift height.

2. Scales according to Claims 1,
**characterised in that** the lift height of the individual keys (10) of the first keyboard segment (8) which are not covered by the inscription membrane (14) is set at values of above 1.5 mm and which are covered by the inscription membrane (14) is set at values of less than 1.5 mm, preferably at roughly 0.5 mm.

3. Scales according to Claim 1,
**characterised in that** the lift height of the individual keys (11) of the second keyboard segment (9) is less than 1.5 mm, preferably 0.5 mm.

4. Scales according to Claim 1,
**characterised in that** the key field (7) is partially or completely covered by a frame (21) divided into individual fields (22) and provided with pictograms (23) and/or alphanumerical designations (24), and the individual keys (10) of the first keyboard segment (8) is set at a minimum lift height of less than 1.5 mm.

## Revendications

1. Balance électronique commandée par un micro-ordinateur, notamment balance de magasin ou industrielle, comprenant un panneau de touches (7) qui présente plusieurs segments de clavier (8, 9) munis de touches individuelles (10, 11),
caractérisée
en ce que les touches individuelles (10) d'au moins un premier segment de clavier (8) ont une hauteur de course réglable, en ce que les touches individuelles (11) d'au moins un deuxième segment de clavier (9) ont une hauteur de course non réglable, et en ce que lesdits au moins deux segments (8, 9) du clavier peuvent être recouverts individuellement ou ensemble par des feuilles imprimées (14) ou par une feuille imprimée, les touches individuelles (10) d'au moins le premier segment de clavier (8) devant de préférence être réglées sur la hauteur de course minimale.

2. Balance selon la revendication 1, caractérisée en ce que la hauteur de course des touches individuelles (10) du premier segment de clavier (8) est réglée à des valeurs supérieures à 1,5 mm lorsqu'elles ne sont pas recouvertes par la feuille imprimée (14), et à des valeurs inférieures à 1,5 mm, de préférence à environ 0,5 mm, lorsqu'elles sont recouvertes par la feuille imprimée (14).

3. Balance selon la revendication 1, caractérisée en ce que la hauteur de course des touches individuelles (11) du deuxième segment de clavier (9) est inférieure à 1,5 mm, de préférence égale à 0,5 mm.

4. Balance selon la revendication 1, caractérisée en ce que le panneau de touches (7) est recouvert partiellement ou totalement par un cadre (21) subdivisé en zones individuelles (22) et muni de pictogrammes (23) et/ou de repères alphanumériques (24), et les touches individuelles (10) du premier segment de clavier (8) sont réglées à une hauteur de course minimale inférieure à 1,5 mm.
